# EUROPEAN PATENT SPECIFICATION

(11) **EP 4 215 154 B1**
(45) Date of publication and mention of the grant of the patent: **28.05.2025**
(21) Application number: 22152420.0
(22) Date of filing: 20.01.2022
(51) Int. Cl.: A61C 17/22, A61C 17/34, B26B 21/52

(54) **HANDLE FOR AN ELECTRICALLY OPERATED PERSONAL CARE IMPLEMENT AND ELECTRICALLY OPERATED PERSONAL CARE IMPLEMENT**
GRIFF FÜR EIN ELEKTRISCH BETRIEBENES KÖRPERPFLEGEGERÄT SOWIE ELEKTRISCH BETRIEBENES KÖRPERPFLEGEGERÄT
POIGNÉE POUR UN INSTRUMENT DE SOINS PERSONNELS À COMMANDE ÉLECTRIQUE ET INSTRUMENT DE SOINS PERSONNELS À COMMANDE ÉLECTRIQUE

(43) Date of publication of application: 26.07.2023
(73) Proprietor: The Gillette Company LLC, Boston, Massachusetts 02127 (US)
(72) Inventor: JUNGNICKEL, Uwe, 61476 Kronberg (DE); GOETZ, Nicolas, 61476 Kronberg (DE)
(74) Representative: P&G Patent Germany

(56) References cited:
- EP-A1- 2 807 947
- EP-B1- 3 123 978
- US-A1- 2011 047 729

## Description

### FIELD OF THE INVENTION

The present disclosure is concerned with a handle for an electrically operated personal care implement, the handle comprising a motor with an eccentric weight. The present disclosure is further concerned with an electrically operated personal care implement comprising such handle.

### BACKGROUND OF THE INVENTION

Personal care implements, like toothbrushes, are well known in the art. Generally, tufts of bristles for cleaning teeth are attached to a bristle carrier or mounting surface of a brush head intended for insertion into a user's oral cavity. A handle is usually attached to the head, which handle is held by the user during brushing.

Electrically operated toothbrushes exhibit the advantage that they assist users during brushing and may facilitate improved cleansing of the teeth and gums, in particular in hard to reach areas in the mouth.

Toothbrushes performing a vibration action usually have a motor with an eccentric weight located in the handle housing and allow vibrations to be transmitted to the head. The motor vibrates the entire handle and therewith also the brush head that is attached to the handle. However, the amplitude of vibrations at the brush head depends on the way the user holds the handle: With a softer grip, the handle can vibrate more extensively and therefore the user feels more vibrations on the teeth. However, if the user holds the handle tightly, vibrations will be significantly damped, and the brush head will vibrate less during use. Consequently, performance of a vibration toothbrush, including in-mouth perception during use is highly dependent on the user's behavior. Also, the motor is usually mounted onto a chassis, the chassis being embedded inside the handle housing, while the brush head is mounted onto the handle housing. The additional chassis-housing interface can further absorb vibrations which leads to further losses of vibration energy.

Further, vibrating toothbrushes are known comprising a motor located within the neck of the toothbrush head close to the bristle carrier to allow the vibrations to be directly transmitted to the head. However, such configuration requires the neck of the toothbrush head to be relatively bulky and large in cross section to allow accommodation of the motor. Such bulky neck, however, impedes good maneuverability of the brush head during brushing and hinders sufficient reach to the back molars. Also, having the motor located within the brush neck requires the neck to be configured as a straight tube to enable insertion of motor components, which again hinders reachability of back molars.

US 2011/047729 A1 discloses an electric toothbrush capable of vibrating a brush head by a vibration source. The electric toothbrush includes a cylindrical case; and a vibration body having one end located within the case and the other end provided so as to protrude through an opening at the tip of the case to the outside of the case for attaching the brush head.

It is an object of the present disclosure to provide a handle for an electrically operated personal care implement, e.g. a handle for a toothbrush, which overcomes at least one of the above-mentioned drawbacks, in particular which provides reliable vibration modes during use while facilitating good maneuverability. It is also an object of the present disclosure to provide a personal care implement comprising such handle.

### SUMMARY OF THE INVENTION

In accordance with one aspect, a handle for an electrically operated personal care implement is provided, the handle comprising:
- a housing comprising an inner cavity, the housing having a proximal end and a distal end opposite the proximal end,
- a connector for repeatably attaching and detaching a head to and from the handle, the connector being partially accommodated within the inner cavity at the proximal end of the housing,
- a motor comprising an eccentric weight for operating the personal care implement, the motor being accommodated within the inner cavity of the housing, wherein
the connector comprises a recess accommodating the motor with the eccentric weight. The connector is made from a material having a higher e-modulus than the material forming the housing.

In accordance with one aspect an electrically operated personal care implement is provided, the personal care implement comprising such handle and a head.

### BRIEF DESCRIPTION OF THE DRAWINGS

The invention is described in more detail below with reference to various embodiments and figures, wherein:
Fig. 1 shows a cross-sectional view of an example embodiment of an electrically operated personal care implement according to the present disclosure, the implement comprising a handle, and a head;
Fig. 2 shows a cross-sectional view of the handle of Fig. 1;
Fig. 3 shows an exploded view of the handle of Fig. 2; and
Fig. 4 shows an enlarged section of the proximal end structure of the handle shown in Fig. 2.

### DETAILED DESCRIPTION OF THE INVENTION

The handle suitable to be used in connection with an electrically operated personal care implement comprises a housing with an inner cavity, the inner cavity being defined by an inner surface of the housing. The handle housing may be made from a hard plastic material, e.g. polypropylene, acrylic styrene acrylonitrile, or copolyester, or from a metal material, for example stainless steel or aluminium. Such materials are highly durable and allow for slim product designs.

As used herein "personal care implement" refers to any implement which can be utilized for the purposes of personal hygiene. Some suitable examples include toothbrushes, flossers, tooth picks, razors, shavers, and trimmers. For example, the personal care implement may be battery-operated and may comprise a battery located in the inner cavity of the handle housing. The electrically operated personal care implement comprising such handle and a head may be an electrically operated toothbrush. The head may be repeatedly attachable to and detachable from the handle, e.g. via a snap-fit locking mechanism thereby providing sufficiently strong connection and stability between the head and the handle to enable a user to perform, e.g. a brushing action.

While the handle of the personal care implement may be adapted for use over a longer period of time as compared to common implements, like manual toothbrushes which are discarded after about three months of use, the relatively cheap head/brush refill can be exchanged on a regular basis, e.g. after about three months. This provides a cost-efficient and environmentally sustainable personal care implement providing both, high quality handle solutions as well as cost saving opportunities as only the head has to be exchanged/re-purchased and not the handle.

The housing has a proximal end and a distal end. The proximal end is defined as the end being closest to a head which is repeatably attachable to and detachable from the handle. The distal end is opposite the proximal end.

A motor with an eccentric weight for operating the personal care implement is accommodated within the inner cavity of the housing. The inner cavity may also accommodate an energy source, e.g. a battery, and/or other means for operating the personal care implement.

A connector for repeatably attaching and detaching a head to and from the handle is partially accommodated within the inner cavity at the proximal end of the housing. **In** other words, the handle housing may comprise an opening at its proximal end, and the connector for repeatedly attaching and detaching the head to and from the handle extends through said opening. The connector comprises a recess in which the motor with the eccentric weight is (entirely) accommodated. The motor with the eccentric weight may be mounted within the connector by means of press-fitting. The recess is provided at the side/end of the connector which is located within the cavity of the handle housing. **In** other words, while the connector extends into the inner cavity at the proximal end of the housing, the head can be attached to the connector geometry extending outside of the housing. The motor comprising the eccentric weight is located at the end opposite the head, inside the connector recess to allow for maximal generation of vibrations. The vibrations are transferrable via the connector to the head without significant absorption by the housing. In other words, as the motor comprising the eccentric weight is mounted directly within the connector to which the head is attached, the vibrations generated by the motor can be directly guided to the head. Even if the housing is tightly grasped by a user, the vibrations will not be absorbed by a chassis or housing, but can be freely and directly transferred to the head.

In-mouth perception and cleaning performance during brushing is enhanced. In contrast to common brush executions having a vibrating function (the motor vibrating the entire handle and therewith the head), the handle according to the present disclosure allows vibrations to be effectively transferred, independent from the way the handle is hold by the user; the amplitude of the vibrations is less damped as the motor is located in close proximity to the head and bristle carrier.

Further, in contrast to vibrating toothbrushes having a motor located within the neck of a toothbrush head requiring a large/thick and straight neck design, the personal care implement according to the present disclosure allows for a slim and curved neck design without compromising on in-mouth maneuverability and comfort during brushing.

The connector according to the present disclosure may have an overall length extension extending along a longitudinal connector axis wherein the overall length extension may have a sub-length (Li) extending within the inner cavity of the housing, and a sub-length (Lo) extending outside of the housing. The ratio between the length (Li) extending within the inner cavity and the length (Lo) extending outside of the housing may be from about 1 to about 1.7, preferably from about 1 to about 1.5. Such ratio provides the connector with sufficient stability and bending stiffness to securely hold the head during use of the implement, while providing sufficient space for accommodating the motor with the eccentric weight within the connector recess. Also, such ratio facilitates superior transmission of the vibrations generated by the motor along the connector axis to the head.

For example, the overall length extension (Lc) of the connector may be from about 35 mm to about 45 mm, or from about 39 mm to about 43 mm. The sub-length extension (Li) of the connector which is accommodated within the inner cavity of the housing may be from about 20 mm to about 25 mm, or from about 22 mm to about 24 mm. The sub-length extension (Lo) of the connector which is outside of the housing may be from about 15 mm to about 20 mm, or from about 17 mm to about 19 mm.

Further, an overall length extension (Lh) of the housing extending along a longitudinal housing axis may be from about 120 mm to about 150 mm, or from about 125 mm to about 145 mm, or from about 130 mm to about 140 mm, or about 130 mm to about 135 mm. A ratio between the overall length extension (Lh) of the housing extending along the longitudinal housing axis and the overall length extension (Lc) of the connector extending along the longitudinal connector axis may be from about 2.5 mm to about 4.5 mm, or from about 3.0 mm to about 3.5 mm As the connector may be only a small part compared to the overall size of the handle housing, and may contain only the critical geometries for a tight fit to the brush and for a tight fixation of the motor comprising the eccentric weight, the geometrical tolerances from a molding process can be better controlled. Tighter overall tolerances can be realized leading to better fit of the critical components (motor and head). A sufficient fit is a prerequisite for an efficient transmission of vibration energy.

The part/extension of the connector which is outside of the housing is the part to which the head can be attached. A relatively short connector head interface geometry allows for a slim neck design - a critical feature for superior maneuverability during use of the implement. Further, the neck design can also be curved, facilitating reachability of back molars during brushing.

The connector is made from a material which is different from the material from which the handle housing is made. Depending on the intended use, the most suitable materials can be selected for both, the connector and the housing. The connector is made from a material having a higher e-modulus than the material forming the housing. A connector being made from a material having a higher e-modulus provides improved stability, stiffness and a secure connection between the connector and the head, in particular if high pressure and high lateral forces are applied during use of the implement.

For example, the material from which the connector is at least partially made may have an e-modulus of at least 4000 MPa, for example from about 4000 MPa to about 20000 MPa, or form about 10000 MPa to about 11000 MPa, or about 10400 MPa. A connector having such modulus of elasticity can be provided if the connector is at least partially molded from a hard plastic material, e.g. from a fiber reinforced material, for example a glass-fiber reinforced material.

To provide the connector with improved mechanical properties in terms of stiffness and resistance against abrasion and wear out (e.g. due to abrasive toothpaste accumulating at the brush head connection), the connector may be made (e.g. molded) from a fiber reinforced material, preferably from a glass-fiber reinforced plastic material. Due to its high stiffness, glass fiber reinforced material is suitable for mounting the motor including the eccentric weight within the recess of the connector by means of press-fitting. As glass fiber reinforced material shows no to very limited relaxation over time, resulting in vibrations being efficiently transmittable over the usual life-time of the implement.

Generally, the fiber reinforced material may comprise a polymer as a base material, and fibers selected from the group of: inorganic particulates, glass fibers, carbon fibers, aramid fibers, basalt fibers, wood fibers, or any combinations thereof. Glass fibers may improve strength, elasticity and heat resistance of the polymer base material. Carbon and aramid fibers may improve elasticity, tensile and compression strength of the polymer base material. Wood fibers may improve flexural strength, tensile modulus, and tensile strength of the polymer base material. Inorganic particulates may improve isotropic shrinkage, abrasion and compression strength of the polymer base material.

The fiber reinforced material may comprise from about 10wt% to about 50wt%, or from about 25wt% to about 35wt%, or about 30wt% fibers. The connector may be made from a glass fiber reinforced polymer material comprising about 30wt% glass fiber. The polymer base material in which the fibers may be embedded may be a polyamide or polybutylene terephthalate, polyethylene terephthalate, or a combination of polybutylene terephthalate and polyethylene terephthalate.

A fiber reinforced material comprising from about 25wt% to about 35wt% glass fiber, wherein the glass fibers are embedded in either polyamide as a base material, or, alternatively in a base material comprising a mixture of polybutylene terephthalate and polyethylene terephthalate may have an e-modulus of about 10400 MPa. Such glass-fiber reinforced material shows superior molding properties while providing sufficient stiffness to the connector, as well as resistance against abrasion and wear out.

The glass fibers embedded in the polymer material may provide significantly increased stiffness, wear resistance and integrity to the polymer material forming the connector. For personal implements, e.g. oral care handles from which the heads are getting frequently detached and re-attached, such material provides the connector with wear resistance allowing the handle to be used over a longer period of time. Long lasting connector properties are in particular important for toothbrushes as the head and handle often get soiled with slurry and toothpaste containing abrasive particles. If the connector material is not sufficiently resistant against abrasives, the abrasives may grind/sand down material of the connector, thereby changing the outer geometry of the connector. As a result, the connector may lose its function, and/or its ability to securely hold the head in place during use, e.g. during brushing.

As glass fiber reinforced plastic materials have typically a less aesthetic appearance and are relatively expensive, the handle housing can be made from a material being more aesthetically appealing and/or cost effective. For example, the connector may be at least partially molded from a fiber reinforced material, while the handle housing may be manufactured from relatively cheap (standard) plastic material, e.g. polypropylene, acrylic styrene acrylonitrile, or copolyester, or from a metal material, for example stainless steel or aluminium. Such materials are highly durable and allow for slim product designs. If a glass- fiber reinforced material is used to form the connector, the connector then has a higher e-modulus than the standard plastic material used to manufacture the housing.

The connector may comprise a spring-loaded snap element in the region outside of the housing. The spring-loaded snap element may provide a snap-fit locking mechanism to ensure sufficiently strong connection and stability between the head and the handle, e.g. to enable a user to perform a brushing action. The connector may have an outer lateral surface and a recess therein, the recess forming a cavity within the connector. Within the cavity a spring-loaded ball-snap element may be provided. The spring-loaded ball-snap element may comprise a ball and a spring, the spring applying a radial force onto the ball in a direction towards the outer lateral surface of the connector. In the following a radial force is defined by a force applied in a direction being substantially perpendicular to the longitudinal length extension of the connector. The spring may apply a force onto the ball and may push the ball outwards so that the ball extends slightly beyond the outer lateral surface of the connector. An inner wall of a hollow portion provided inside of the head may comprise a recess for receiving the ball of the spring-loaded ball element. Once the head is snap-fitted onto the connector, the head can be fixed on the connector in an axial direction. In other words, the connector may allow for easy attachment/detachment of the head to and from the connector. The user can attach the head to the handle by a simple linear motion. Further, the ball-snap may provide a precise fixation of the head, and a distinct haptic feedback may be given to the user that the head is snapped-on securely. In other words, the user can recognize once the ball engages into the recess in the inner wall of the hollow portion of the head. The head can be easily removed, i.e. without performing a synchronized action with other elements/unlocking mechanisms.

The head is fixed on the handle until a specific/predetermined pull-off force is applied. The connection between the head and connector is sufficiently strong enabling well-coordinated brushing techniques. The head does not get loosened from the handle and does not twist aside during brushing.

The ball and/or the spring of the spring-loaded ball element may be made from stainless steel. While typical snap elements comprise a spring element made from plastic that shows relaxation and aging effects over time, a stainless steel spring shows a constant spring rate over time, also under extended use conditions (e.g. temperature). A spring-loaded ball element made from stainless steel may provide long-lasting, reliable fixation of the head on the connector/handle.

The spring-loaded ball element may be fixed in the cavity of the connector by a press-fitting process and/or gluing.

The connector may comprise a first substantially cylindrical section and a second substantially cylindrical section, wherein the first and the second cylindrical sections may be connected by an at least partially conically shaped section. The first substantially cylindrical section, the at least partially conically shaped section and the second substantially cylindrical section may be arranged in consecutive order and may define the longitudinal length extension of the connector. The first and the second substantially cylindrical sections may be placed off-center with respect to the longitudinal length extension of the connector.

In the following, a substantially cylindrical section is defined by a three-dimensional body having a longitudinal length extension and a cross-sectional area extending substantially perpendicular to the longitudinal length extension. The cross-sectional area has a shape being substantially constant along the longitudinal length extension. Since the connector may be manufactured by an injection molding process, a substantially cylindrical section also comprises sections/bodies which have a slight draft angle of up to about 2°. In other words, a substantially cylindrical section also comprises a section/body which tapers slightly by up to about 2° towards a proximal end which is closest to the head once the head is attached to the connector.

The cross-sectional area may have any shape, for example substantially circular, ellipsoid, rectangular, semi-circular, circular with a flattening portion, convex or concave. The cross-sectional area may have the shape of a polygon, for example of a square or triangle. The outer lateral surface circumventing the cylinder along its length extension can be defined as being composed of straight lines which are substantially parallel with respect to the longitudinal length extension of the cylinder.

The head of the personal care implement has a distal end and a proximal end, the proximal end being defined as the end closest to the handle. The proximal end of the head may comprise a hollow portion for receiving a part of the connector, for example, the second substantially cylindrical section, the at least partially conically shaped section and a part of the first substantially cylindrical section. The hollow portion of the head may have an inner wall with a geometry/contour which corresponds to the outer geometry/contour of the part of the connector to be inserted into the hollow portion of the head. The eccentric arrangement/off-center positioning of the substantially cylindrical sections of the connector enables precise positioning of the head on the handle. The geometric position of the head can be clearly defined. As the handle comprises the connector at a proximal end being closest to the head, the eccentric/off-center arrangement of the two substantially cylindrical sections may act as a guidance element when a user attaches the head to the handle. In other words, the two substantially cylindrical sections may allow for accurate fitting between the head and the handle. Further, the eccentric/off-center arrangement of the two substantially cylindrical sections may provide an anti-twist protection for the head on the handle during brushing, for example if a lateral force is applied onto the head.

The proximal end of the handle housing may comprise a chamfered surface. Such chamfered surface may provide the personal/oral care implement with additional anti-twist protection during use. The chamfered surface and a cross-sectional area of the handle may define an angle α from about 15° to about 30°, or from about 18° to about 28°, or about 25°. Said cross-sectional area is defined by an area extending substantially perpendicular to the longitudinal length extension of the handle. Surprisingly, it has been found out that such angled/chamfered surface provides superior anti-twist protection. Furthermore, the angled/chamfered surface allows for draining-off fluids, like toothpaste slurry and saliva, after use of the personal/oral care implement, thereby preventing accumulation of such fluids over time.

The handle housing may comprise a switch assembly connected to a Printed Circuit Board Assembly (PCBA) for activating the energy source, e.g. for switching the electrically operated personal care implement to an ON/OFF status. Via the PCBA electrical communication between the battery as an example for an energy source, and the motor can be provided.

The handle may comprise a magnetic/ferromagnetic plate placed inside the handle housing. The plate may allow for hygienic storage of the personal care implement by magnetically attaching the handle to a magnetic holder, e.g. provided at a wall. If the personal care implement is a toothbrush, remaining water, toothpaste slurry and saliva can drain off from the brush. The implement can dry relatively quickly. Consequently, bacteria growth can significantly be reduced, thereby rendering the personal/oral care implement more hygienic. In contrast to a common toothbrushes being stored in a toothbrush beaker where drained fluids get collected and accumulated at the bottom of the beaker, the brush according to the present disclosure is exposed to wet conditions over a significantly shorter period of time.

The magnetic holder may have the form of a flat disk attachable to a wall. Such flat disk may represent an easy to clean surface. Further, a user just needs to bring the personal/oral care implement in close proximity to the magnetic holder, and then the personal/oral care implement gets attached automatically. No precise positioning or threading as with common toothbrush holders is required. If the magnetic properties are merely provided in the handle, and not in the head, the head portion cannot accidentally be attached to the magnetic holder, thereby reducing the risk that the magnetic holder gets soiled.

If the personal care implement is a toothbrush, tooth cleaning elements, e.g. bundle of filaments forming one or a plurality of tufts, may be attached to the toothbrush head by means of a hot tufting process. One method of manufacturing the head with tufts of filaments embedded in the head may comprise the following steps: In a first step, tufts are formed by providing a desired amount of filaments. In a second step, the tufts are placed into a mold cavity so that ends of the filaments which are supposed to be attached to the head extend into said cavity. The opposite ends of the filaments not extending into said cavity may be either end-rounded or non-end-rounded. For example, the filaments may be not end-rounded in case the filaments are tapered filaments having a pointed tip. In a third step the head is formed around the ends of the filaments extending into the mold cavity by an injection molding process, thereby anchoring the tufts in the head. Alternatively, the tufts may be anchored by forming a first part of the head - a so called "sealplate" - around the ends of the filaments extending into the mold cavity by an injection molding process before the remaining part of the head is formed. Before starting the injection molding process the ends of the tufts extending into the mold cavity may be optionally melted or fusion-bonded to join the filaments together in a fused mass or ball so that the fused masses or balls are located within the cavity. The tufts may be held in the mold cavity by a mold bar having blind holes that correspond to the desired position of the tufts on the finished head of the oral care implement. In other words, the tufts attached to the head by means of a hot tufting process are not doubled over a middle portion along their length and are not mounted in the head by using an anchor/staple. The tufts are mounted on the head by means of an anchor-free tufting process.

Alternatively, the head for the oral care implement may be provided with a bristle carrier having at least one tuft hole, e.g. a blind-end bore. A tuft comprising a plurality of filaments may be fixed/anchored in said tuft hole by a stapling process/anchor tufting method. This means, that the filaments of the tuft are bent/folded around an anchor, e.g. an anchor wire or anchor plate, for example made of metal, in a substantially U-shaped manner. The filaments together with the anchor are pushed into the tuft hole so that the anchor penetrates into opposing side walls of the tuft hole thereby anchoring/fixing/fastening the filaments to the bristle carrier. The anchor may be fixed in opposing side walls by positive and frictional engagement. In case the tuft hole is a blind-end bore, the anchor holds the filaments against a bottom of the bore. In other words, the anchor may lie over the U-shaped bend in a substantially perpendicular manner. Since the filaments of the tuft are bent around the anchor in a substantially U-shaped configuration, a first limb and a second limb of each filament extend from the bristle carrier in a filament direction. Filament types which can be used/are suitable for usage in a stapling process are also called "two-sided filaments". Heads for oral care implements which are manufactured by a stapling process can be provided in a relatively low-cost and time-efficient manner.

The following is a non-limiting discussion of an example embodiment of a personal/oral care implement and parts thereof in accordance with the present disclosure, where reference to the Figures is made.

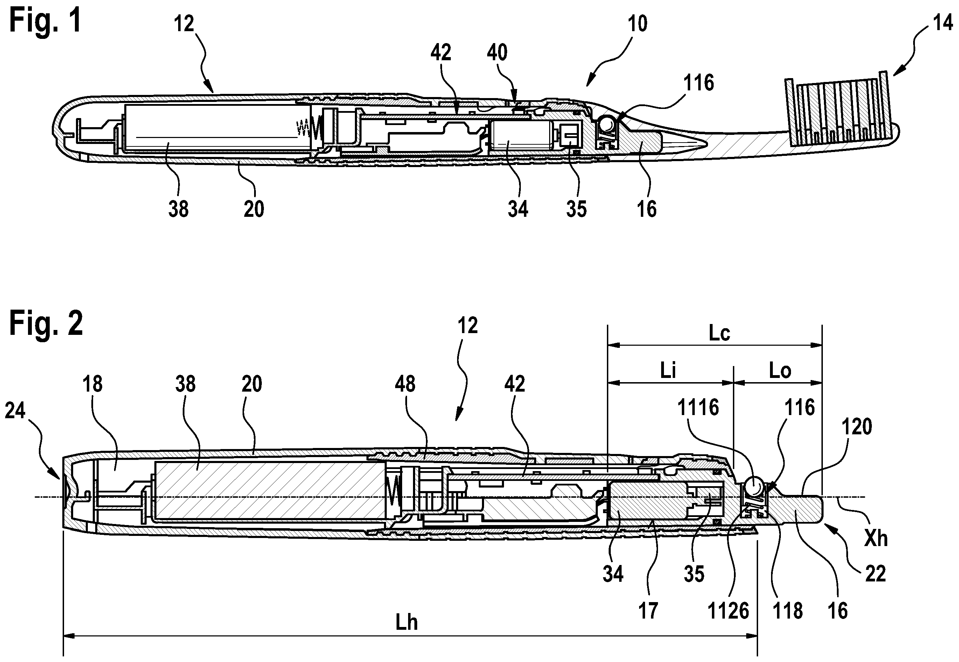

Fig. 1 shows a personal care implement 10, in this specific embodiment an electrically operated oral care implement, i.e. toothbrush 10. Toothbrush 10 comprises a handle 12 and a head 14, the head 14 being repeatedly attachable to and detachable from the handle 12 by means of connector 16. The connector 16 may comprise a spring-loaded snap element 116, e.g. a spring-loaded ball element 116 comprising a ball 1116 and a spring 1126, the spring 1126 applying a radial force onto the ball 1116 in a direction towards an outer lateral surface 120 of the connector 116. The ball 1116 may be insertable into a recess provided in a hollow portion of the head 14 to securely fix the head 14 onto the connector 16.

The handle 12 comprises a housing 20 defining an inner cavity 18. The housing 20 has a proximal end 22 closest to the head 14 attachable to the handle 12, and a distal end 24. The distal end 24 is opposite the proximal end 22. The connector 18 extends through an opening 30 provided at the proximal end 22 of the housing 20. In other words, the connector 16 is partially accommodated within the inner cavity 18 at the proximal end 22 of the housing 20.

The connector 16 comprises a recess 17 at the opposite side 11 to which the head 14 is attachable. In the connector recess 17, a motor 34 along with an eccentric weight 35 for operating the personal care implement 10 is mounted by means of press-fitting. In other words, the motor 34 and the eccentric weight 35 are mounted within the recess 17 of the connector 16. The part of the connector 16 comprising the recess 17 housing the motor 34 and eccentric weight 35 is mounted within the inner cavity 18 of the handle housing 20.

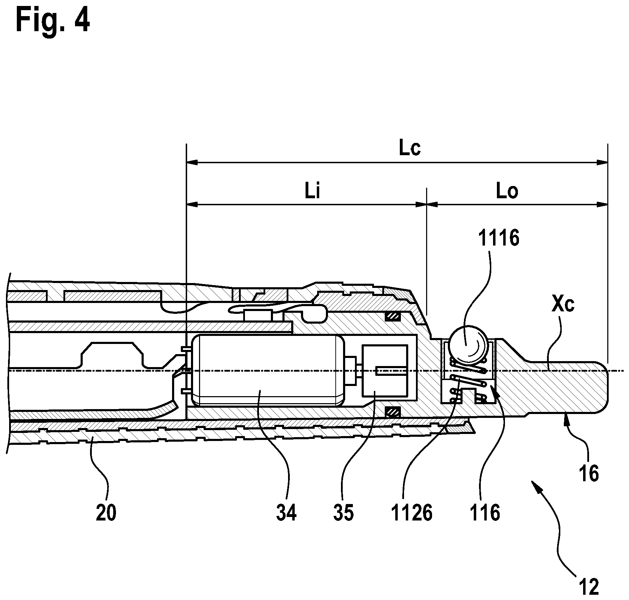

As derivable from Fig. 4, the connector 16 has an overall length extension Lc extending along a longitudinal connector axis Xc, the overall length extension Lc being composed of a sub-length Li extending and being located within the inner cavity 18 of the housing 20, and a sub-length Lo extending outside of the housing 20. The ratio Rc between the length Li extending within the inner cavity 18 and the length Lo extending outside of the housing 20 may be from about 1 to about 1.7, or from about 1 to about 1.5. The overall length extension Lc may be from about 35 mm to about 45 mm, or from about 39 mm to about 43 mm. The sub-length Li of the connector 16 extending within the inner cavity 18 of the housing 20 may be from about 20 mm to about 25 mm, or from about 22 mm to about 24 mm, while the sub-length Lo of the connector 16 extending outside of the housing 20 may be from about 15 mm to about 20 mm, or from about 17 mm to about 19 mm.

A ratio Rhc between an overall length extension Lh of the handle housing 20 extending along a longitudinal housing axis Xh and the overall length extension Lc of the connector 16 extending along a longitudinal connector axis Xc may be from about 2.5 to about 4.5, or from about 3.0 to about 3.5. The overall length extension of the handle housing 20 and the overall length extension of the connector 16 is measured at the maximum extension of the housing 20 and connector 16, respectively. The overall length extension Lh of the housing 20 extending along the longitudinal housing axis may be from about 120 mm to about 150 mm, or from about 125 mm to about 145 mm, or from about 130 mm to about 140 mm, or from about 130 mm to about 135 mm.

The connector 16 may be at least partially molded from a hard plastic material, e.g. from a fiber reinforced material, in particular a glass-fiber reinforced material. Due to its high stiffness, glass fiber reinforced material is suitable for mounting the motor 34 with the eccentric weight 35 within the recess 17 of the connector 16 by means of press-fitting. Glass fiber reinforced material shows no to very limited relaxation over time, resulting in effective vibration transmissions over the full usual life-time of the handle implement 12. The glass-fiber reinforced material may comprise a polymer base material in which about 10wt% to about 50wt%, or from about 25wt% to about 35wt%, or about 30wt% glass-fibers are embedded. The polymer base material may be a polyamide or polybutylene terephthalate, polyethylene terephthalate, or a combination of polybutylene terephthalate and polyethylene terephthalate.

For example, the material from which the connector is at least partially made may have an e-modulus of at least 4000 MPa, for example from about 4000 MPa to about 20000 MPa, or form about 10000 MPa to about 11000 MPa, or about 10400 MPa. A fiber reinforced material comprising from about 25wt% to about 35wt% glass fiber, wherein the glass fibers are embedded in either polyamide as a base material, or, alternatively in a base material comprising a mixture of polybutylene terephthalate and polyethylene terephthalate may have an e-modulus of about 10400 MPa. Such glass-fiber reinforced material shows superior molding properties while providing sufficient stiffness to the connector 16, as well as resistance against abrasion and wear out.

The connector 16 can be made from a material having a higher e-modulus than the material forming the housing 20. For example, the connector may be made from a fiber reinforced material, e.g. glass-fiber reinforced material, while the handle can be made from a standard hard plastic material, e.g. acrylonitrile styrene acrylate (ASA). For example, if ASA is used as a material/base material for the handle housing, a material with an e-modulus of about 2500 MPa may be provided. The hard plastic material (e.g. ASA) may be at least partially over-molded by a thermoplastic elastomer (TPE) providing the handle with improved aesthetic and/or gripping properties. The handle housing 20 may be made from at least two separate handle parts 52, 54, the separate parts 52, 54 being connected via a screw thread, for example. While the first part 52 of the housing 20 may be molded from a hard plastic material, the second part 54 may be made from the same or another material to provide the handle/housing with superior aesthetic and/or gripping effects. For example, the second part 54 may be also made from a hard plastic material, but over-molded with TPE to provide superior gripping properties during use of the personal care implement 10.

Between the first part 52 of the handle housing 20 and the second part 54 of the handle housing 20, a first O-ring 56 may be inserted to provide the handle of the personal care implement with additional aesthetic features and/or an indication element. Also, the first O-ring 56 may act as a sealing element to prevent any liquids, e.g. water or saliva, from entering the inner cavity 18 of the housing 20. Further, on the connector 16, a second O-ring 58 may be provided at the proximal end 22 of the handle housing 20. The second O-ring 58 may serve as an aesthetic feature, an indication element and/or as a sealing element to prevent any liquids, like water and slurry, entering the inner cavity 18 of the handle housing 20. The first and/or the second O-ring 56, 58 may be made from an elastomeric material.

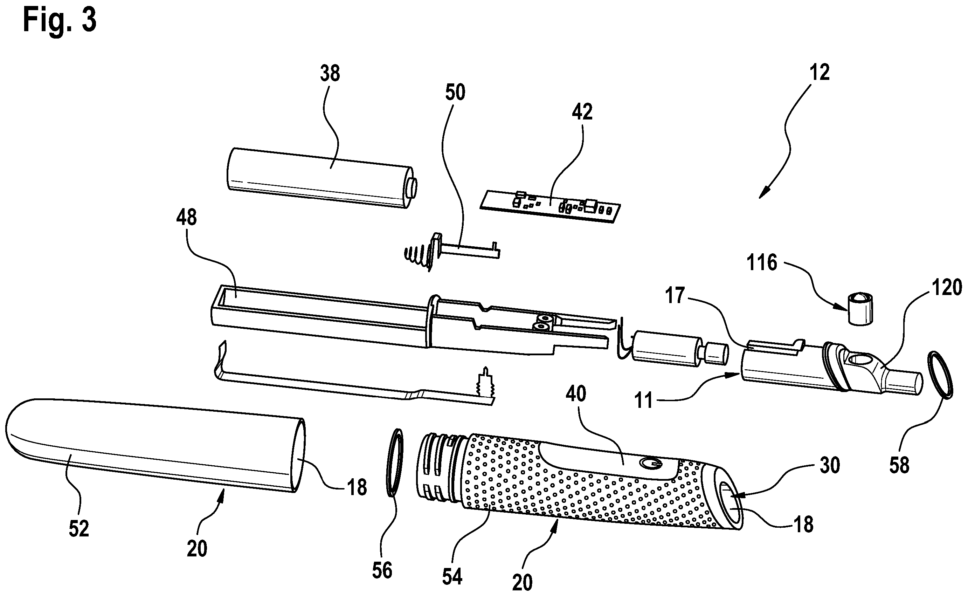

An energy source 38, e.g. a battery 38, for operating the personal care implement 10 may be accommodated within the inner cavity 18 of the housing 20. As derivable from Figs. 2 and 3, a switch assembly 40 connected to a Printed Circuit Board Assembly (PCBA) 42 provided within the inner cavity of the handle housing 20 can activate the energy source 38 and may switch the electrically operated personal care implement 10 to an ON/OFF status. Via the PCBA 42 electrical communication between the battery 38, as an example for an energy source, and the motor 34 can be provided.

As shown in Figs. 2 and 3, a chassis 48 is inserted into the handle housing 20, the chassis 48 fixing and holding the energy source 38 via spring 50, the PCBA 42 and the connector 16 accommodating the motor 34 with the eccentric weight 35 in place.

In the context of this disclosure, the term "substantially" refers to an arrangement of elements or features that, while in theory would be expected to exhibit exact correspondence or behavior, may, in practice embody something slightly less than exact. As such, the term denotes the degree by which a quantitative value, measurement or other related representation may vary from a stated reference without resulting in a change in the basic function of the subject matter at issue.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A handle (12) for an electrically operated personal care implement (10), the handle (12) comprising:
- a housing (20) comprising an inner cavity (18), the housing (20) having a proximal end (22) and a distal end (24) opposite the proximal end (22),
- a connector (16) for repeatably attaching and detaching a head (14) to and from the handle (12), the connector being partially accommodated within the inner cavity (18) at the proximal end (22) of the housing (20),
- a motor (34) comprising an eccentric weight (35) for operating the personal care implement (10), the motor (34) being accommodated within the inner cavity (18) of the housing (20), wherein
the connector (16) comprises a recess accommodating the motor (34) with the eccentric weight (35), characterized therein that
the connector (16) is made from a material having a higher e-modulus than the material forming the housing (20).

2. A handle (12) of claim 1, wherein the connector has an overall length extension (Lc) extending along a longitudinal connector axis (Xc), the overall length extension (Lc) having a sub-length (Li) extending within the inner cavity (18) of the housing (20), and a sub-length (Lo) extending outside of the housing (20), and the ratio (Rc) between the length (Li) extending within the inner cavity (18) and the length (Lo) extending outside of the housing (20) is from 1 to 1.7, preferably about 1 to 1.5.

3. A handle (12) of claim 2, wherein the overall length extension (Lc) of the connector (16) is from 35 mm to 45 mm, preferably from 39 mm to 43 mm.

4. A handle (12) of claims 2 or 3, wherein the sub-length (Li) of the connector (16) extending within the inner cavity (18) of the housing (20) is from 20 mm to 25 mm, preferably from 22 mm to 24 mm.

5. A handle (12) of any of claims 2 to 4, wherein the sub-length (Lo) of the connector (16) extending outside of the housing (20) is from 15 mm to 20 mm, preferably from 17 mm to 19 mm.

6. A handle (12) of any of the preceding claims, wherein the inner cavity (18) of the housing (20) comprises an energy source (38), preferably a battery (38), for operating the personal care implement (10).

7. A handle (12) of any of the preceding claims, wherein the connector (16) is at least partially molded from a hard plastic material, the hard plastic material being a fiber reinforced material.

8. A handle (12) of any of the preceding claims, wherein the connector (16) is at least partially molded from a glass-fiber reinforced material.

9. A handle (12) of any of the preceding claims, wherein the connector (16) comprises a spring-loaded snap element (116).

10. A handle (12) of any of the preceding claims, wherein the motor (34) comprising the eccentric weight is mounted within the connector (16) by means of press-fitting.

11. A handle (12) of any of the preceding claims, wherein a ratio (Rhc) between an overall length extension (Lh) of the housing (20) extending along a longitudinal housing axis (Xh) and an overall length extension (Lc) of the connector (16) extending along a longitudinal connector axis (Xc) is from 2.5 to 4.5, preferably from 3 to 3.5.

12. An electrically operated personal care implement (10) comprising a handle (12) according to any of the preceding claims and a head.

13. An electrically operated personal care implement (10) according to claim 12, wherein the implement (10) is an electrically operated oral care implement, preferably a toothbrush (10).

14. An electrically operated personal care implement (10) according to claim 12 or 13, wherein the head is repeatedly attachable to and detachable from the handle (12).

## Patentansprüche

1. Griff (12) für ein elektrisch betriebenes Körperpflegehilfsmittel (10), der Griff (12) umfassend:
- ein Gehäuse (20), umfassend einen Innenhohlraum (18), wobei das Gehäuse (20) ein proximales Ende (22) und ein dem proximalen Ende (22) entgegengesetztes distales Ende (24) aufweist,
- einen Verbinder (16) zum wiederholten Anbringen und Abnehmen eines Kopfstücks (14) an und von dem Griff (12), wobei der Verbinder teilweise innerhalb des Innenhohlraums (18) an dem proximalen Ende (22) des Gehäuses (20) untergebracht ist,
- einen Motor (34), umfassend ein Exzentergewicht (35) zum Betreiben des Körperpflegehilfsmittels (10), wobei der Motor (34) innerhalb des Innenhohlraums (18) des Gehäuses (20) untergebracht ist, wobei
der Verbinder (16) eine Aussparung umfasst, in der der Motor (34) mit dem Exzentergewicht (35) untergebracht ist, **dadurch gekennzeichnet, dass** der Verbinder (16) aus einem Material hergestellt ist, das einen höheren E-Modul aufweist als das Material, das das Gehäuse (20) ausbildet.

2. Griff (12) nach Anspruch 1, wobei der Verbinder eine Gesamtlängenverlängerung (Lc) aufweist, die sich entlang einer Verbinderlängsachse (Xc) verlängert, wobei die Gesamtlängenverlängerung (Lc) eine Teillänge (Li), die sich innerhalb des Innenhohlraums (18) des Gehäuses (20) verlängert, und eine Teillänge (Lo), die sich außerhalb des Gehäuses (20) verlängert, aufweist und wobei das Verhältnis (Rc) zwischen der Länge (Li), die sich innerhalb des Innenhohlraums (18) verlängert, und der Länge (Lo), die sich außerhalb des Gehäuses (20) verlängert, von 1 bis 1,7, vorzugsweise etwa 1 bis 1,5 beträgt.

3. Griff (12) nach Anspruch 2, wobei die Gesamtlängenverlängerung (Lc) des Verbinders (16) von 35 mm bis 45 mm, vorzugsweise von 39 mm bis 43 mm beträgt.

4. Griff (12) nach Anspruch 2 oder 3, wobei die Teillänge (Li) des Verbinders (16), die sich innerhalb des Innenhohlraums (18) des Gehäuses (20) verlängert, von 20 mm bis 25 mm, vorzugsweise von 22 mm bis 24 mm beträgt.

5. Griff (12) nach einem der Ansprüche 2 bis 4, wobei die Teillänge (Lo) des Verbinders (16), die sich aus dem Gehäuse (20) verlängert, von 15 mm bis 20 mm, vorzugsweise von 17 mm bis 19 mm beträgt.

6. Griff (12) nach einem der vorstehenden Ansprüche, wobei der Innenhohlraum (18) des Gehäuses (20) eine Energiequelle (38), vorzugsweise eine Batterie (38), zum Betreiben des Körperpflegehilfsmittels (10) umfasst.

7. Griff (12) nach einem der vorstehenden Ansprüche, wobei der Verbinder (16) wenigstens teilweise aus einem harten Kunststoffmaterial gegossen ist, wobei das harte Kunststoffmaterial ein faserverstärktes Material ist.

8. Griff (12) nach einem der vorstehenden Ansprüche, wobei der Verbinder (16) wenigstens teilweise aus einem glasfaserverstärkten Material gegossen ist.

9. Griff (12) nach einem der vorstehenden Ansprüche, wobei der Verbinder (16) ein federbelastetes Schnappelement (116) umfasst.

10. Griff (12) nach einem der vorstehenden Ansprüche, wobei der Motor (34), umfassend das Exzentergewicht, mittels Presspassung innerhalb des Verbinders (16) montiert ist.

11. Griff (12) nach einem der vorstehenden Ansprüche, wobei ein Verhältnis (Rhc) zwischen einer Gesamtlängenverlängerung (Lh) des Gehäuses (20), die sich entlang einer Gehäuselängsachse (Xh) verlängert, und einer Gesamtlängenverlängerung (Lc) des Verbinders (16), die sich entlang einer Verbinderlängsachse (Xc) verlängert, von 2,5 bis 4,5, vorzugsweise von 3 bis 3,5 beträgt.

12. Elektrisch betriebenes Körperpflegehilfsmittel (10), umfassend einen Griff (12) nach einem der vorstehenden Ansprüche und ein Kopfstück.

13. Elektrisch betriebenes Körperpflegehilfsmittel (10) nach Anspruch 12, wobei das Hilfsmittel (10) ein elektrisch betriebenes Mundpflegehilfsmittel, vorzugsweise eine Zahnbürste (10) ist.

14. Elektrisch betriebenes Körperpflegehilfsmittel (10) nach Anspruch 12 oder 13, wobei das Kopfstück wiederholt an dem Griff (12) anbringbar und von diesem abnehmbar ist.

## Revendications

1. Poignée (12) destinée à un instrument de soins personnels (10) à commande électrique, la poignée (12) comprenant :
- un logement (20) comprenant une cavité interne (18), le logement (20) ayant une extrémité proximale (22) et une extrémité distale (24) opposée à l'extrémité proximale (22),
- un raccord (16) permettant d'attacher et de détacher de manière répétée une tête (14) par rapport à la poignée (12), le raccord étant reçu partiellement au sein de la cavité interne (18) au niveau de l'extrémité proximale (22) du logement (20),
- un moteur (34) comprenant un poids excentrique (35) permettant de faire fonctionner l'instrument de soins personnels (10), le moteur (34) étant reçu au sein de la cavité interne (18) du logement (20), dans laquelle
le raccord (16) comprend un évidement recevant le moteur (34) avec le poids excentrique (35), **caractérisé en ce que** le raccord (16) est fabriqué à partir d'un matériau ayant un module e plus élevé que le matériau formant le logement (20).

2. Poignée (12) selon la revendication 1, dans laquelle le raccord a une extension en longueur globale (Lc) s'étendant le long d'un axe longitudinal de raccord (Xc), l'extension en longueur globale (Lc) ayant une sous-longueur (Li) s'étendant au sein de la cavité interne (18) du logement (20), et une sous-longueur (Lo) s'étendant à l'extérieur du logement (20), et le rapport (Rc) entre la longueur (Li) s'étendant au sein de la cavité interne (18) et la longueur (Lo) s'étendant à l'extérieur du logement (20) va de 1 à 1,7, de préférence d'environ 1 à 1,5.

3. Poignée (12) selon la revendication 2, dans laquelle l'extension en longueur globale (Lc) du raccord (16) va de 35 mm à 45 mm, de préférence de 39 mm à 43 mm.

4. Poignée (12) selon les revendications 2 ou 3, dans laquelle la sous-longueur (Li) du raccord (16) s'étendant au sein de la cavité interne (18) du logement (20) va de 20 mm à 25 mm, de préférence de 22 mm à 24 mm.

5. Poignée (12) selon l'une quelconque des revendications 2 à 4, dans laquelle la sous-longueur (Lo) du raccord (16) s'étendant à l'extérieur du logement (20) va de 15 mm à 20 mm, de préférence de 17 mm à 19 mm.

6. Poignée (12) selon l'une quelconque des revendications précédentes, dans laquelle la cavité interne (18) du logement (20) comprend une source d'énergie (38), de préférence une batterie (38), permettant de faire fonctionner l'instrument de soins personnels (10).

7. Poignée (12) selon l'une quelconque des revendications précédentes, dans laquelle le raccord (16) est au moins partiellement moulé à partir d'un matériau plastique dur, le matériau plastique dur étant un matériau renforcé par des fibres.

8. Poignée (12) selon l'une quelconque des revendications précédentes, dans laquelle le raccord (16) est au moins partiellement moulé à partir d'un matériau renforcé par des fibres de verre.

9. Poignée (12) selon l'une quelconque des revendications précédentes, dans laquelle le raccord (16) comprend un élément encliquetable monté sur ressort (116).

10. Poignée (12) selon l'une quelconque des revendications précédentes, dans laquelle le moteur (34) comprenant le poids excentrique est monté au sein du raccord (16) au moyen d'un ajustement serré.

11. Poignée (12) selon l'une quelconque des revendications précédentes, dans laquelle un rapport (Rhc) entre une extension en longueur globale (Lh) du logement (20) s'étendant le long d'un axe longitudinal de logement (Xh) et une extension en longueur globale (Lc) du raccord (16) s'étendant le long d'un axe longitudinal de raccord (Xc) va de 2,5 à 4,5, de préférence de 3 à 3,5.

12. Instrument de soins personnels (10) à commande électrique comprenant une poignée (12) selon l'une quelconque des revendications précédentes et une tête.

13. Instrument de soins personnels (10) à commande électrique selon la revendication 12, dans lequel l'instrument (10) est un instrument de soins personnels à commande électrique, de préférence une brosse à dents (10).

14. Instrument de soins personnels (10) à commande électrique selon la revendication 12 ou 13, dans lequel la tête peut être attachée et détachée de manière répétée par rapport à la poignée (12).
